# EUROPEAN PATENT SPECIFICATION

(11) **EP 3 315 676 B1**
(45) Date of publication and mention of the grant of the patent: **03.07.2019**
(21) Application number: 15808251.1
(22) Date of filing: 23.10.2015
(51) Int. Cl.: E03C 1/264, E03C 1/282, B01D 35/02

(54) **ACCESSORY FOR SANITATION FACILITIES**
ZUBEHÖR FÜR SANITÄRE EINRICHTUNGEN
ACCESSOIRE POUR INSTALLATIONS SANITAIRES

(30) Priority: 25.06.2015 ES 201530907
(43) Date of publication of application: 02.05.2018
(73) Proprietor: Andreu Sabuco, Francisco Javier, 03680 Alicante (ES)
(72) Inventor: Andreu Sabuco, Francisco Javier, 03680 Alicante (ES)
(74) Representative: Isern Patentes y Marcas S.L.
(86) International application number: PCT/ES2015/070766
(87) International publication number: WO 2016/207452

(56) References cited:
- FR-A1- 2 922 911
- US-A- 1 608 966
- US-A- 5 638 557
- US-A- 6 153 095

## Description

### OBJECT OF THE INVENTION

The object of the present invention is an accessory for sanitation facilities.

More specifically, the invention proposes the development of an accessory for sanitation facilities, in particular intended for the treatment of a flow of discharge water coming from a sink which attempts to prevent or eliminate blockages in the interior of the pipes while at the same time reducing the environmental contamination by discharging water with fewer solid residual particles to the exterior.

### BACKGROUND OF THE INVENTION

At present, in a vast majority of homes, the solid particle filtering system of a sink in a kitchen is carried out by means of a drainer element located in the outlet hole of the part of the sink which is provided with holes or continuous grooves which allows the passage of water and they retain solid particles, which can be subsequently removed manually.

However, solid particles or residues of smaller size pass through the drainer element with the consequent drawback that they subsequently accumulate in the syphon pipe, causing the blocking of the same. This fact implies the use of a plunger or having to separate the pipe from the rest of facility for the emptying and cleaning thereof, such that it requires certain skill and time to dedicate to such operations.

Documents US6153095A and US1 608966A relate to an accessory for sanitation facilities according to the preamble of claim 1, but in these documents the filtering element has to be removed periodically in order to be cleaned. Document US1 608966A is considered as the closest prior art.

Furthermore, the applicant does not have knowledge at present of an invention which provides all the characteristics which are described in this specification.

### DESCRIPTION OF THE INVENTION

The present invention has been developed with the aim of providing an accessory which is configured as a novelty within the application field and resolves the previously mentioned drawbacks, also providing other additional advantages which will be evident from the description below.

Therefore an object of the present invention is to provide an accessory for sanitation facilities, in particular intended for the treatment of a flow of discharge water coming from a sink or similar, according to the features of independent claim 1. This accessory comprises a housing which has an inlet region and an outlet region for the water flow couplable to the pipe which exits from the lower part of the sink, a filtering element having been provided in the interior of the housing to allow the passage of the flow and to retain small particles, rotary actuation means and an endless screw actuatable by way of the rotary actuation means. Furthermore, it comprises a storage container joined in a removable manner and in communication with the interior of the housing, the storage container being located with respect to the endless screw, such that upon actuating the endless screw, particles accumulated in the filtering element are displaced towards the interior of the storage container.

Thanks to these characteristics, a device is obtained which is easy to manufacture and install which allows blockage conditions of the water discharge pipe, which exits from a sink, to be avoided since it allows the accumulation of residual particles from the fluid current, which circulates through the pipe into a storage container, to be removed and stored, said storage container can be emptied to discharge the contents thereof into a bag for residues, which avoids the direct discharge thereof into the water.

Another advantage which the previously described accessory has, is the fact that the operator or user is not at any moment in direct contact with the solid mass to unblock the filter thanks to the presence of the endless screw which acts as a particle extractor medium.

Another advantageous aspect, with no less significance, of the invention is that compacting the solid mass in the storage container benefits the dehydration thereof and thus avoids or reduces the creation of bacteria colonies which affect the health.

In a particularly preferred embodiment of the invention, the rotary actuation means comprise a handle which can be actuated by any user which includes an axis couplable to the endless screw.

Advantageously, the handle can be a grip at one end of the same which facilitates the turning action for the user.

In an alternative embodiment, the rotary actuation means comprise an electric motor provided with a rotary axis couplable to the endless screw such that it avoids the application of a force on the part of the user to effect the turning of the endless screw. Preferably, the inlet region comprises a tubular portion with a diameter and length suited to the dimensions of the pipe which exits from the lower part of the sink.

Also in a preferred manner, the outlet region comprises a tubular portion with a diameter and length suited to the dimensions of the pipe which exits from the lower part of the sink.

According to another aspect of the invention, the joining between the housing and the storage container is by means of a thread type joining, such that it is easy to place and/or remove the storage container for emptying and cleaning the interior thereof.

Preferably the filtering element can consist of a mesh or meshed surface which is easy to install in the interior of the casing.

According to another characteristic of the invention, the housing includes a cover joined by screw elements to said housing, the joining area between cover and housing having the water-tight means.

Other characteristics and advantages of the accessory, object of the invention, are evident from the description of a preferred, but not exclusive, embodiment which is illustrated by way of non-limiting example in the drawings enclosed, in which:

### BRIEF DESCRIPTION OF THE DRAWINGS

Figure 1 is a schematic elevation view of an accessory for sanitation facilities according to the present invention; and
Figure 2 is a schematic view of a sanitation facility provided with the accessory according to the invention.

### DESCRIPTION OF A PREFERRED EMBODIMENT

In view of the mentioned figures and in accordance with the adopted numeration, a preferred exemplary embodiment of the invention can be observed in the figures, which comprises the parts and elements which are indicated and described in detail below.

The accessory which is described and is indicated in a general manner with the reference (1) is intended to preferably form of a sanitation facility, for the treatment of a discharge water flow coming from a sink or other similar element.

This accessory (1) comprises a housing (2) formed by a body with a prismatic geometry and internally hollow, which has an inlet region defined by a tubular portion (3) with a diameter and length suited to the dimensions of the pipe (4) which exits from the lower part of the sink (5) and fixable with the aid of a mounting flange (not shown) and an outlet region for the flow of water defined by a tubular portion (6) with a diameter and length suited to the dimensions of the pipe (4) which exits from the lower part of the sink (5).

In the interior of the housing (2), there is provided a filtering element (7) in the manner of a mesh for allowing the passage of the water flow and retaining small particles and an endless screw (8) actuatable by way of rotary actuation means which are described below. The accessory (1) has a storage container (9), made of any suitable material, such as for example, metal or plastic, which is joined in a removable manner and in communication with the interior of the housing (2), the storage container (9) being located with respect to the endless screw (8), such that when the user causes the endless screw to rotate, solid particles accumulated in the filtering element (7) are displaced towards the interior of the storage container (9).

In the embodiment shown, the rotary actuation means previously described comprise a handle (10) which includes an axis (13) couplable to the endless screw (8), having a grip (11) at one end of the handle.

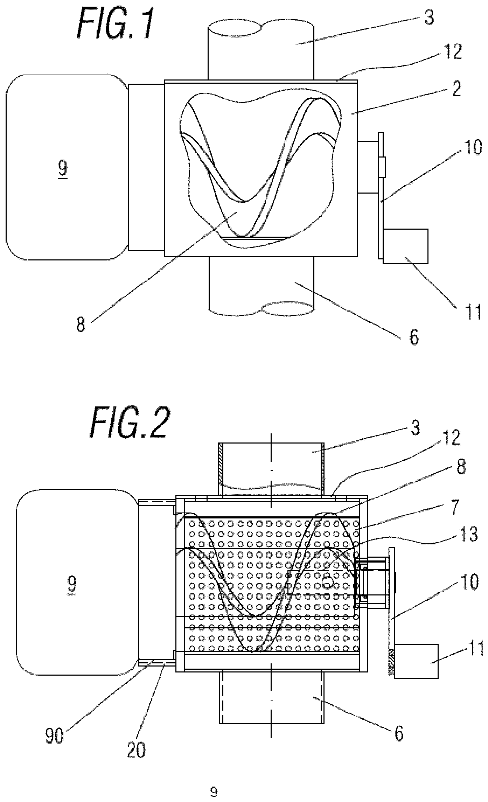

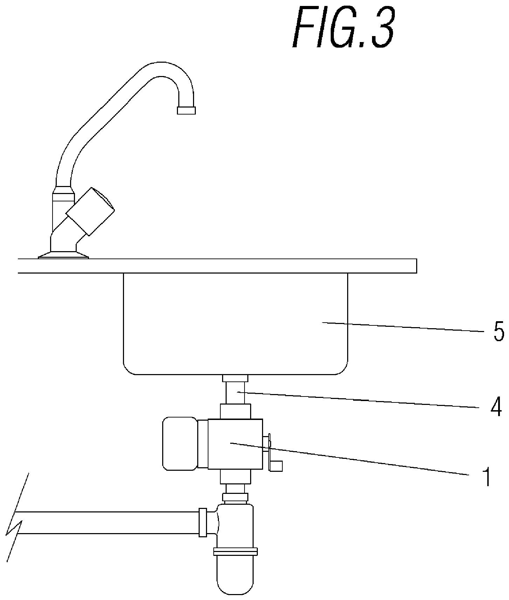

It should be mentioned that in another embodiment of the invention, not shown, the rotary actuation means comprise an electric motor with reduced dimensions provided with a rotary axis couplable to the endless screw. As can be seen in figure 1, the joining between the housing (2) and the storage container (9) is carried out by means of cylindrical portions (20, 90) provided with threaded regions complementing each other, present both on the body of the storage container (9) and on the housing (2).

In order to facilitate the installation and cleaning of the internal parts present in the housing (2), the latter includes a cover (12) joined by screw elements (not shown) to said housing (2), the joining area between the cover (12) and housing (2) having water-tight means, such as a rubber seal arranged in an adjusted manner (not shown).

The details, the forms, the dimensions and other accessory elements used in the manufacture of the accessory of the invention can be conveniently substituted for others which do not depart from the scope defined by the claims included below.

## Claims

1. An accessory (1) for sanitation facilities, in particular intended for the treatment of a flow of discharge water coming from a sink or similar, comprising a housing (2) which has an inlet region and an outlet region for the water flow, the housing being couplable to the pipe which exits from the lower part of the sink, the accessory further comprising a filtering element (7) having been provided in the interior of the housing to allow the passage of the flow and to retain small particles and also comprising a storage container (9) joined in a removable manner and in communication with the interior of the housing, **characterized in that** the accessory further comprises rotary actuation means and an endless screw (8) actuatable by way of the rotary actuation means, the storage container (9) being located with respect to the endless screw (8), such that upon actuation of the endless screw (8), particles accumulated in the filtering element (7) are displaced towards the interior of the storage container (9).

2. The accessory (1) for sanitation facilities according to claim 1, **characterized by** the fact that the rotary actuation means comprise a handle (10) which includes an axis couplable to the endless screw (8).

3. The accessory (1) for sanitation facilities according to claim 2, **characterized by** the fact that one end of the handle (10) includes a grip (11).

4. The accessory (1) for sanitation facilities according to claim 1, **characterized by** the fact that the rotary actuation means comprise an electric motor provided with a rotary axis couplable to the endless screw (8).

5. The accessory (1) for sanitation facilities according to claim 1, **characterized by** the fact that the inlet region comprises a tubular portion with a diameter and length suited to the dimensions of the pipe which exits from the lower part of the sink.

6. The accessory (1) for sanitation facilities according to claim 1, **characterized by** the fact that the outlet region comprises a tubular portion with a diameter and length suited to the dimensions of the pipe which exits from the lower part of the sink.

7. The accessory (1) for sanitation facilities according to claim 1, **characterized by** the fact that the joining between the housing (2) and the storage container (9) is by means of a thread type joining.

8. The accessory (1) for sanitation facilities according to claim 1, **characterized by** the fact that the filtering element (7) consists of a mesh.

9. The accessory (1) for sanitation facilities according to claim 1, **characterized by** the fact that the housing (2) includes a cover (12) which is joined by means of screw elements to said housing (2), the joining area between the cover (12) and the housing (2) having water-tight means.

## Patentansprüche

1. Zubehör (1) für Sanitäranlagen, die insbesondere zur Behandlung eines Stroms von Abwasser, das aus einem Becken oder ähnlichem kommt, dient, umfassend ein Gehäuse (2), das einen Einlassbereich und einen Auslassbereich für den Wasserstrom aufweist, wobei das Gehäuse an dem Rohr gekoppelt werden kann, das aus dem unteren Teil des Beckens austritt, wobei das Zubehör ferner ein Filterelement (7) umfasst, das im Inneren des Gehäuses bereitgestellt wurde, um den Durchgang des Stroms zu ermöglichen und die kleinen Teilchen zurückzuhalten und auch einen Speicherbehälter (9) umfasst, der entfernbar und in Kommunikation mit dem Inneren des Gehäuses zusammengefügt ist, **dadurch gekennzeichnet, dass** das Zubehör ferner Drehbetätigungsmittel und eine Endlosschraube (8) umfasst, die mittels Drehbetätigungsmitteln betätigt werden kann, wobei der Behälter (9) in Bezug auf die Endlosschraube (8) angeordnet ist, sodass bei Betätigung der Endlosschraube (8) Teilchen, die im Filterelement (7) angesammelt sind, in Richtung des Inneren des Speicherbehälters (9) befördert werden.

2. Zubehör (1) für Sanitäranlagen nach Anspruch 1, **gekennzeichnet durch** die Tatsache, dass die Drehbetätigungsmittel einen Griff (10) umfassen, der eine Achse aufweist, die mit der Endlosschraube (8) gekoppelt werden kann.

3. Zubehör (1) für Sanitäranlagen nach Anspruch 2, **gekennzeichnet durch** die Tatsache, dass eine Ende des Griffs (10) ein Griffstück (11) aufweist.

4. Zubehör (1) für Sanitäranlagen nach Anspruch 1, **gekennzeichnet durch** die Tatsache, dass die Drehbetätigungsmittel einen elektrischen Motor umfassen, der mit einer Drehachse bereitgestellt ist, die mit der Endlosschraube (8) gekoppelt werden kann.

5. Zubehör (1) für Sanitäranlagen nach Anspruch 1, **gekennzeichnet durch** die Tatsache, dass der Einlassbereich einen rohrförmigen Abschnitt mit einem Durchmesser und einer Länge umfasst, die zu den Abmessungen des Rohrs passen, das aus dem unteren Teil des Beckens austritt.

6. Zubehör (1) für Sanitäranlagen nach Anspruch 1, **gekennzeichnet durch** die Tatsache, dass der Auslassbereich einen rohrförmigen Abschnitt mit einem Durchmesser und einer Länge umfasst, die zu den Abmessungen des Rohrs passen, das aus dem unteren Teil des Beckens austritt.

7. Zubehör (1) für Sanitäranlagen nach Anspruch 1, **gekennzeichnet durch** die Tatsache, dass die Verbindung zwischen dem Gehäuse (2) und dem Speicherbehälter (9) mittels einer gewindeartigen Verbindung erfolgt.

8. Zubehör (1) für Sanitäranlagen nach Anspruch 1, **gekennzeichnet durch** die Tatsache, dass das Filterelement (7) aus einem Gewebenetz besteht.

9. Zubehör (1) für Sanitäranlagen nach Anspruch 1, **gekennzeichnet durch** die Tatsache, dass das Gehäuse (2) eine Abdeckung (12) aufweist, die mittels Schraubenelementen an das Gehäuse (2) angefügt ist, wobei der Verbindungsbereich zwischen der Abdeckung (12) und dem Gehäuse (2) wasserdichte Mittel aufweist.

## Revendications

1. Accessoire (1) pour installations sanitaires, prévu notamment pour le traitement d'un flux d'eau résiduelle provenant d'un évier ou analogue, comprenant un logement (2) qui a une région d'entrée et une région de sortie pour le flux d'eau, le logement pouvant être couplé au tuyau qui sort de la partie inférieure de l'évier, l'accessoire comprenant en outre un élément de filtrage (7) ayant été prévu à l'intérieur du logement pour permettre le passage du flux et pour retenir de petites particules et comprenant également un réservoir de stockage (9) relié de manière amovible et en communication avec l'intérieur du logement, **caractérisé en ce que** l'accessoire comprend en outre des moyens d'actionnement rotatif et une vis sans fin (8) pouvant être actionnée par les moyens d'actionnement rotatif, le réservoir de stockage (9) étant situé par rapport à la vis sans fin (8), de telle sorte que dès l'actionnement de la vis sans fin (8), les particules accumulées dans l'élément de filtrage (7) sont déplacées vers l'intérieur du réservoir de stockage (9).

2. Accessoire (1) pour installations sanitaires selon la revendication 1, **caractérisé par le fait que** les moyens d'actionnement rotatif comprennent une poignée (10) qui comporte un axe pouvant être couplé à la vis sans fin (8).

3. Accessoire (1) pour installations sanitaires selon la revendication 2, **caractérisé par le fait qu'**une extrémité de la manche (10) comprend une poignée (11).

4. Accessoire (1) pour installations sanitaires selon la revendication 1, **caractérisé par le fait que** les moyens d'actionnement rotatif comprennent un moteur électrique pourvu d'un axe de rotation pouvant être couplé à la vis sans fin (8).

5. Accessoire (1) pour installations sanitaires selon la revendication 1, **caractérisé par le fait que** la région d'entrée comprend une partie tubulaire avec un diamètre et une longueur adaptés aux dimensions du tuyau qui sort de la partie inférieure de l'évier.

6. Accessoire (1) pour installations sanitaires selon la revendication 1, **caractérisé par le fait que** la région de sortie comprend une partie tubulaire avec un diamètre et une longueur adaptés aux dimensions du tuyau qui sort de la partie inférieure de l'évier.

7. Accessoire (1) pour installations sanitaires selon la revendication 1, **caractérisé par le fait que** la liaison entre le logement (2) et le réservoir de stockage (9) se fait au moyen d'une liaison du type fileté.

8. Accessoire (1) pour installations sanitaires selon la revendication 1, **caractérisé par le fait que** l'élément de filtrage (7) consiste en un treillis.

9. Accessoire (1) pour installations sanitaires selon la revendication 1, **caractérisé par le fait que** le logement (2) comporte un couvercle (12) qui est relié audit logement au moyen d'éléments à vis (2), la zone de liaison entre le couvercle (12) et le logement (2) ayant des moyens d'étanchéité.
